# EUROPEAN PATENT SPECIFICATION

(11) **EP 0 492 939 B1**
(45) Date of publication and mention of the grant of the patent: **18.09.1996**
(21) Application number: 91311712.3
(22) Date of filing: 17.12.1991
(51) Int. Cl.: G09G 1/16

(54) **Method and apparatus for arranging access of VRAM to provide accelerated writing of vertical lines to an output display**
Verfahren und Einrichtung zur Zugriffsanordnung eines VRAM zum beschleunigten Schreiben von vertikalen Linien auf einer Anzeige
Méthode et dispositif d'arrangement de l'accès à un VRAM pour obtenir l'écriture accélérée de lignes verticales sur un dispositif d'affichage

(30) Priority: 21.12.1990 US 632040
(43) Date of publication of application: 01.07.1992
(73) Proprietor: SUN MICROSYSTEMS, INC., Mountain View, CA 94043 (US)
(72) Inventor: Moffat, Guy, Palo Alto, California 94306 (US)
(74) Representative: Wombwell, Francis

(56) References cited:
- EP-A- 0 492 938
- IBM JOURNAL OF RESEARCH AND DEVELOPMENT vol. 28, no. 4, July 1984, NEW YORK US pages 393 - 398 D.L.OSTAPKO 'A mapping and memory chip hardware which provides symmetric reading/writing of horizontal and vertical lines'
- COMPUTER DESIGN vol. 25, no. 9, May 1986, LITTLETON, MASSACHUSETTS US pages 65 - 82 T. WILLIAMS 'Super chips bring unprecedented power to graphics display control'.

## Description

### BACKGROUND OF THE INVENTION

### 1 . Field Of The Invention:

This invention relates to computer systems and, more particularly, to methods and apparatus for accessing frame buffers used in providing output signals to output displays so that vertical lies are described rapidly.

### 2. History Of The Prior Art:

Computer systems use a buffer memory called a frame buffer for storing data which is to be written to an output display. The information in the frame buffer is written to the display line-by-line generally beginning at the upper left-hand corner of the display and continuing to the lower right-hand corner. One frame of information is followed by the next so that, as the picture in one frame changes to the picture in the next, continuous motion is presented.

Typically, a frame buffer is constructed of video random access memory (VRAM) which differs from conventional random access memory by having a first random access port at wich the frame buffer may be read or written and a second line-at-a-time serial output port through which pixel data is furnished to the circuitry controlling the output display. Such a construction allows information to be witten to the frame buffer while the frame buffer continually furnishes information to the output display.

One physical arrangement used for frame buffers arranges a number of banks of VRAMs so that a first pixel of a horizontal line which is to be displayed is stored in a first VRAM bank, a second pixel on the line is stored in a second VRAM bank, a third pixel on the line is stored in a third VRAM bank, and so on through the last VRAM bank. Then the pixel storage starts over at the first of the VRAM banks. This arrangement allows very rapid writing of pixels describing a single horizontal line because a number of pixels may be written to the frame buffer together. Moreover, page mode addressing which allows more rapid addressing within a page of memory than typical random access of the frame buffer enhances this effect for horizontal lines.

However, the drawing of vertical lines on a display suffers drastically using the typical multiple banks frame buffer just described. This occurs because drawing a vertical line requires that the same VRAM bank of a frame buffer be used for each pixel of the line. Consequently, pixel accesses in the same VRAM bank must be addressed sequentially through the random access ports to describe the line. Since the same bank is being addressed to write to the frame buffer, there has been no way to make the accesses in parallel or to cause those accesses to overlap. The use of page mode accessing does not speed up the addressing of pixels describing vertical lines since the size of a page is typically only about a line or two of the display.

Drawing vertical lines has become more important recently with the advent of the various screen control programs which display a plurality of different application programs in a plurality of windows on the display. The number of vertical lines used by these screen programs makes the time required for their drawing less than trivial. It would, therefore, be advantageous to be able to accelerate the operation of drawing vertical lines on the output display of a computer system.

IBM JOURNAL OF RESEARCH AND DEVELOPMENT, vol. 28, no. 4, July 1984, Armonk, New York, USA, pages 393-398, D.L. Ostapko "A mapping and memory chip hardware which provides symmetric reading/writing of horizontal and vertical lines" describes a mapping and memory chip hardware allowing a single memory access to modify a series of pixels in either the horizontal or vertical direction.

In view of the prior art and problems outlined above, it is an object of the present invention to speed the operation of drawing vertical lines and non-horizontal lines on the output display of a computer system without sacrificing horizontal line drawing speed.

It is another more specific object of the present invention to provide an improved method and apparatus for accessing frame buffers to allow vertical lines to be drawn more rapidly on the output display.

According to the present invention there is provided an apparatus for accessing pixels for display on an output display, as set forth in claim 1 appended hereto.

Also according to the present invention there is provided a method for accessing VRAM as set forth in claim 10 appended hereto.

The preferred embodiment relates to an arrangement for writing to and reading from the random access ports of a frame buffer so that individual pixels to be presented to describe a vertical line on an output display are arranged sequentially from top to bottom in different banks of the frame buffer so that the accesses to the frame buffer may be overlapped.

These and other objects and features of the invention will be better understood by reference to the detailed description which follows taken together with the drawings in which like elements are referred to by like designations throughout the several views.

### BRIEF DESCRIPTION OF THE DRAWINGS

Figure 1 is a diagram illustrating the arrangement of individual VRAMS in a frame buffer associated with an output display.

Figure 2 is a diagram illustrating the pattern in which VRAMs are selected to present pixels in a typical arrangement in accordance with the prior art.

Figure 3 is a block diagram illustrating a circuit for controlling access to VRAMs in a frame buffer of the prior art.

Figure 4 is a diagram illustrating a pattern in which VRAMs are selected to present pixels in an arrangement in accordance with the present invention.

Figure 5 is a block diagram illustrating a circuit for controlling access to VRAMs in a frame buffer in accordance with the present invention.

### NOTATION AND NOMENCLATURE

Some portions of the detailed descriptions which follow are presented in terms of symbolic representations of operations on data bits within a computer memory. These descriptions and representations are the means used by those skilled in the data processing arts to most effectively convey the substance of their work to others skilled in the art. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like. It should be borne in mind, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary or desirable in most cases in any of the operations described herein which form part of the present invention; the operations are machine operations. Useful machines for performing the operations of the present invention include general purpose digital computers or other similar devices. In all cases the distinction between the method operations in operating a computer and the method of computation itself should be borne in mind. The present invention relates to apparatus and to method steps for operating a computer in processing electrical or other (e.g. mechanical, chemical) physical signals to generate other desired physical signals.

### DETAILED DESCRIPTION OF THE INVENTION

As described above, one physical design used for frame buffer memories arranges a number of banks of video random access memories so that a first pixel on a horizontal line to be displayed is stored in a first bank of video random access memory (VRAM), a second pixel in a second VRAM bank, a third pixel in a third VRAM bank, and so on through the last VRAM bank. The arrangement allows very rapid writing of pixels describing a single horizontal line on an output display but the drawing of vertical lines on a display suffers drastically. This occurs because drawing a vertical line requires that the same bank of a frame buffer be addressed sequentially using random access addressing for each sequential pixel of the line. Since the same bank is being addressed through sequential accesses to the frame buffer, there has been no way to make the accesses overlap.

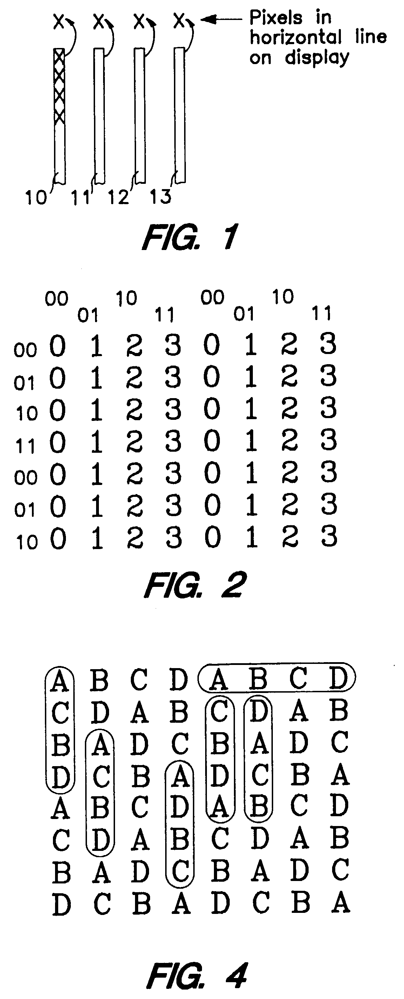

Figure 1 is a diagram illustrating an arrangement of individuaL VRAMs in a frame buffer associated with an output display. As may be seen, four individual VRAMs V0-V3 are physically arranged so that they provide pixels for display. Each of the banks of VRAMs holds one of the pixels in a sequence of four pixels in a horizontal line. In Figure 1, each pixel provided by a bank of VRAM is illustrated in a position on an abbreviated horizontal line at which it might appear on the display. Because of the typical addressing scheme of the prior art which will be discussed in detail below, the access of the VRAMs, both for reading and for writing a horizontal line using the random access ports may occur to a great extent in parallel and therefore very rapidly.

When, however, a vertical line is being described, the time for accessing the frame buffer increases drastically. This may be understood by viewing the first four pixel positions in the left hand column of the VRAM bank V0 of Figure 1. As may be seen from the descending Xs which describe the pixels in a short vertical line, each position which stores these first four pixels is stored in the same bank 10 of the frame buffer. Consequently, to describe a vertical line, the VRAM bank V0 must be accessed through the random access port of the frame buffer four individual times in sequence for writing the four pixels. Since these pixels are in the same VRAM bank 10 of the frame buffer, the accesses cannot be overlapped. For this reason, the drawing of a vertical line takes a significantly greater amount of time than does the access of the frame buffer to describe a horizontal line.

Figure 2 illustrates a repeating pattern of pixels held in a typical frame buffer having four individual video random access memory banks arranged as described in Figure 1. As may be seen, the pixel pattern 0, 1, 2, 3 illustrates the sequence of VRAM banks in which the pixels in lines to be displayed are stored. Each of the pixels in a sequence describing a horizontal line may be seen to be stored in a repeating sequence of VRAM banks. On the other hand, the pixels describing any vertical line are all stored in the same VRAM bank. It is worth noting at this point that any diagonal line will be described by a series of pixels which are stored in different VRAM banks of such a frame buffer. However, the typical number of diagonal lines which are presented are significantly less than the number of vertical lines so it is the vertical line presentation which slows the drawing to the display.

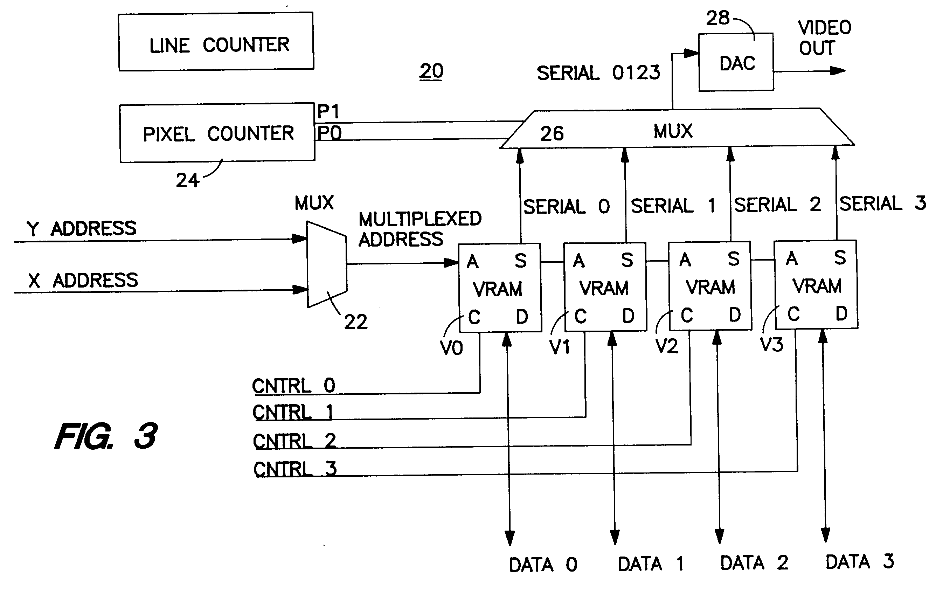

Figure 3 is a block diagram illustrating a circuit 20 for controlling access to VRAM banks in a frame buffer of the prior art which will better illustrate why horizontal lines may be described more rapidly than may vertical lines. The circuit 20 includes four banks of VRAMs individually labelled as V0 through V3. X and Y addresses are provided through a multiplexor 22 (which indicates, in general, the random accessing circuitry for addressing the frame buffer). The multiplexed address is furnished to all of the individual banks of VRAMs V0-V3. All of these banks have the same address for four individual pixels in a horizontal line in the sequence 0, 1, 2, 3 illustrated in Figure 2. As the individual pixels are furnished on the data lines DATA 0 through DATA 3, control signals CNTRL 0 through CNTRL 3 select the particular bank of VRAM to which the pixel is to be written. If the pixel information is available simultaneously on all of the data lines, then it may be written to the four VRAM positions on a horizontal line simultaneously. This is obviously a very rapid operation. In like manner, the information describing a horizontal line may be read out of the random access ports is the same rapid manner.

In order to provide pixels for display, a pixel counter 24 furnishes select signals P0 and P1 to a multiplexor 26. The multiplexor 26 receives pixels simultaneously from the four VRAM banks for the particular four pixel horizontal segment of a line described above. The signals P0 and P1 from the pixel counter 24 cause the multiplexor 26 to select the pixels in sequential order for transfer to a digitat-to-analog converter circuit 28 and then on for ultimate display, all in a manner well known to the prior art.

When writing to the frame buffer 20 of Figure 3 to describe a vertical line, on the other hand, each pixel position must be individually addressed because the pixel positions all lie in the same VRAM bank. Thus, the availability of data on the four data lines DATA 0-3 simultaneously does not hasten the writing of a vertical line to the frame buffer because only one bank of VRAM is being written to. Reading information describing a vertical line through the random access ports of such a frame buffer 20 occurs in substantially the same manner since the same facilities are used. Consequently, the accessing of information describing a vertical line through the random access ports in such a frame buffer 20 is very slow relative to the accessing time required for describing a horizontal line.

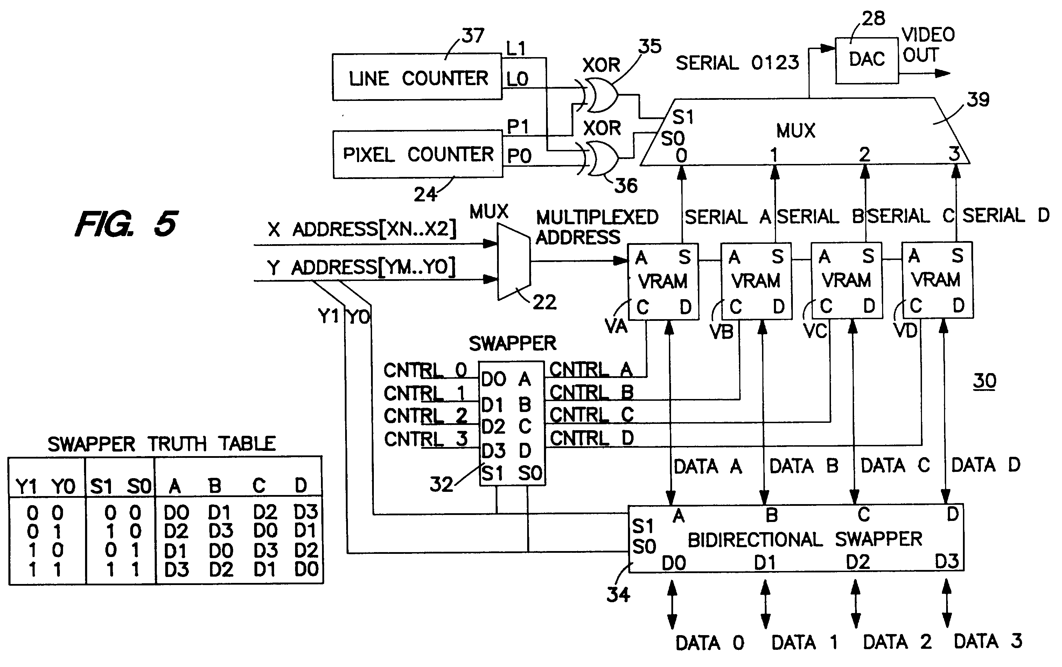

Figure 4 is a diagram illustrating a pattern in which pixel information may be stored in the VRAM banks which make up a frame buffer in accordance with the present invention. Using this pattern, information describing vertical lines may be stored in the VRAM banks much more rapidly than in the arrangement of Figure 3. In the diagram, the letter A is used to indicate a pixel stored in a first VRAM bank, the letter B is used to indicate a pixel stored in a second VRAM bank, the letter C is used to indicate a pixel stored in a third VRAM bank, and the letter D is used to indicate a pixel stored in a fourth VRAM bank.

As may be seen from the pattern, the pixels in a horizontal line to be presented on the output display are stored in the same sequential order as in the above described prior art arrangement except that certain lines commence with different pixels. However, the pixels which describe a vertical line lie in an entirely different pattern than in the prior art arrangement. In fact, the pixels which describe a vertical line lie in an order in which each of the pixels in a four pixel sequence lies in a different VRAM bank. This is the of any four pixels in a vertical sequence as may be seen from the lines encircling a number of such sequences in Figure 4.

Since none of the pixels in a vertical sequence of four pixels fall in the same VRAM bank, the accesses of the frame buffer through the random access ports for a write to the frame buffer or a read from the buffer may be overlapped to speed those operations and the operation of describing a vertical line on the display.

Providing a frame buffer storage pattern as in Figure 4 in which no pixel in a vertical line lies adjacent another pixel in the line stored in the same VRAM bank may be accomplished by circuitry which reviews the number of a line in which pixels are stored and realigns those pixels depending upon the line number. Figure 5 is a block diagram illustrating a circuit 30 for controlling access to VRAM banks in a frame buffer in order to obtain the benefits of the present invention. As may be seen, Figure 5 includes circuitry in addition to that included in Figure 3. This circuitry is utilized in order to access the correct addresses in the frame buffer to store the pixel information in accordance with the diagram of Figure 4, to read that pixel information from the frame buffer through the random access port, and to write the information to the display. It should be noted at this point that although the circuit 30 describes only four individual VRAM banks (here referred to as VA, VB, VC, VD) in the frame buffer circuit 30 of Figure 5 and in the pattern of Figure 4, a different number of VRAM banks might be employed. For example, eight banks of VRAM might be used in a frame buffer to provide more rapid access. The details of such an arrangement, however, are felt to outweigh the benefits of understanding provided so only four banks are illustrated in this description. Those skilled in the art will understand how to modify the circuitry to extend the number of VRAM banks.

The circuit 30 of Figure 5 includes in addition to that illustrated in the circuit of Figure 3, a gating circuit 32 for swapping the normal control signals CNTRL 0 through CNTRL 3 to enable the appropriate VRAM bank so that data describing a particular pixel may be stored in a VRAM bank of the frame buffer 30. The circuit 30 also includes a bidirectional swapping circuit 34 of gates for directing data to or from the appropriate VRAM banks to provide the storage pattern described in Figure 4. In addition to these circuits used for providing access at the random access ports of the circuit 30, a first pair of XOR gates 35 and 36 and a line counter circuit 37 are used to enable a multiplexor 39 so that the data describing the pixels being sent to the display may be restored to its original order.

The operation of the circuit 30 in providing storage for pixels in accordance with the pattern described in Figure 4 will now be described. To write to the frame buffer, the X and Y addresses of the pixels are furnished on the X and Y address lines. It should be noted that the X addresses are all the same for each of four adjacent bit positions while the Y addresses increment by one with each line. This occurs because in the system of the preferred embodiment, four pixels values of eight bits may be transferred in a thirty-two bit word. Four sequential eight bit pixels may be formed from such a word each having the same X address. The two lowest order digits of the Y addresses forming the pattern illustrated in Figure 2 are shown to the left of that pattern.

The addresses furnished are the addresses which are furnished in a typical system and are the addresses furnished on the X and Y address lines in the circuit 30 of the present invention. In addition, the data furnished to describe the pixels at each position appears at the DATA 0 through DATA 3 data lines in the same order as in the prior art circuit 20. These four pixel values may appear in a single data word and be addressed to adjacent pixel positions. To accomplish this, they are separated into eight bit groups which are placed on the four adjacent data lines DATA 0-3. In this manner, the four pixels may be stored simultaneously as described above.

The addresses would normally place pixel data at positions at the intersection of any two such addresses as in the pattern of Figure 2. However, unlike the circuit 20 of Figure 3, the circuit 30 places that data not at the expected intersections of the addresses but in the pattern illustrated in Figure 4. To accomplish this, the lowest two bits of the Y address are used to actuate the swapper circuits 32 and 34. Using the Y address values shown, it may be seen that in the first line all Y addresses end in 00 binary. Consequently, the values at the select terminals S0 and S1 of the swapper circuits 32 and 34 transfer the values illustrated in the truth table in Figure 5. In reading the table, the Y0 and Y1 values for each vertical line are shown to the left. Immediately to the right are shown the select values provided to the select terminals of the swapper circuits 32 and 34. To the right are shown the data terminals on which input signals appear, and above each data terminal is shown the enable signal generated and thus, in effect, the bank to which the data is directed.

Thus, for a four pixel horizontal line starting at address 00, 00, the truth table of Figure 5 shows that the first pixel selected appears on DATA 0 and the first control signal A sends that pixel to VRAM bank A. The second pixel selected appears on DATA 1 and the second control signal B sends that pixel to VRAM bank B. The third pixel selected appears on DATA 2 and the third control signal C sends that pixel to VRAM bank C. The fourth pixel selected appears on DATA 3 and the fourth control signal D sends that pixel to VRAM bank D. Since these pixel data values appear simultaneously in a single data word, they are all stored in the four banks of VRAM simultaneously. Thus, the four pixels of the horizontal line are placed in their standard sequential order.

However, the lowest order bits of the Y address values for any vertical column vary in a pattern of 0101 for Y0 and 0011 for Y1 as a vertical line moves down from address 00,00. Thus, it may be seen that the values produced selected by the two lower digits of the Y addresses for pixels in the first vertical column will vary as a vertical line moves down from address 00,00. Thus for a four pixel vertical line starting at address 00, 00, the truth table of Figure 5 illustrates that the first pixel selected appears on DATA 0 and the first control signal A sends that pixel to VRAM bank VA. The second pixel selected appears on DATA 0 and the second control signal C sends that pixel to VRAM bank VC. The third pixel selected appears on DATA 0 and the third control signal B sends that pixel to VRAM bank VB. The fourth pixel selected appears on DATA 0 and the fourth control signal D sends that pixel to VRAM bank VD. Thus, the four pixel vertical line is placed in the position illustrated for the first column in Figure 5.

Additional vertical and horizontal lines may be tested using the truth table of Figure 5, but it will be apparent that the pattern of Figure 4 will be produced for the standard input addresses.

In a similar manner, the XOR gates 35 and 35 are furnished values from display line counter and the pixel counter and produce output values to control the multiplexor 41 so that the values sequentially furnished to the display when the multiplexor 39 is furnished lines of pixels serially arranged in accordance with the pattern of Figure 4 will be in the regular ABCD order as in a typical frame buffer arrangement.

Thus, as may be seen, the circuit of the present invention functions to place pixel data in the pattern illustrated in Figure 4, a pattern which allows the overlapping of accesses in writing a vertical line to the frame buffer and thus the rapid access of the frame buffer in describing vertical lines on the output display. Although it may be seen in Figure 4 that a greater number of diagonal lines described will require sequential access of the same VRAM bank, no vertical line will do so. Because the much greater number of vertical than diagonal lines which statistically appear on a display in windowing environment, the speed of the displaying is expected to increase significantly. There is no sequence of four pixels, even on the diagonal, where there is no interleaving at all. Consequently, the performance improvement is expected to be between three and four. Thus, the remap of the chip select lines provided by this invention provides significantly better vertical line performance without giving up any horizontal performance.

## Claims

1. An apparatus for accessing pixels for display on an output display, being arranged to receive pixel data and an X address and a Y address for accessing a plurality of 2ⁿ VRAM banks in an original order,
said apparatus comprising:
means for providing a plurality of n select signals comprising a plurality of n least significant bits of said Y address in reverse order;
means for providing a plurality of 2ⁿ control signals determined by a plurality of n least significant bits of said X address;
said VRAM banks (VA, VB; VC, and VD), each comprising a control input, a pixel input, and a serial pixel output;
a first swapper circuit (34) being arranged to receive said pixel data in said original order and to receive said select signals, said first swapper circuit (34) for mapping said pixel data to said pixel input of different said VRAM banks depending upon the state of said select signals, said mapping resulting in adjacent pixels defining a vertical line in said original order being stored in different said VRAM banks;
a second swapper circuit (32) being arranged to receive said control signals and said select signals, said second swapper circuit (32) for mapping said control signals to said control input of said VRAM banks depending upon the state of said select signals, said mapping resulting in adjacent pixels defining a vertical line in said original order being stored in different said VRAM banks;
a pixel counter (24) for generating a plurality of n pixel number signals indicating a pixel number for pixel data being transferred from said serial pixel output of said VRAM banks;
a line counter (37) for generating a plurality of n line signals indicating a line number for pixel data being transferred from said serial pixel output of said VRAM banks; and
a logic circuit (35 and 36) for receiving said line signals and said pixel number signals and for generating a plurality of n multiplexor select signals such that a multiplexor (39) receives in operation said serial pixel output of said VRAM banks and maps said serial pixel data to said original order for display on said output display.

2. The circuit defined by claim 1, wherein said select signals comprise an S0 signal and an S1 signal such that if said select signals S0 and S1 are both in a first state then a pixel input of a first VRAM bank is mapped to a serial pixel output of said first VRAM bank, and a pixel input of a second VRAM bank is mapped to a serial pixel output of said second VRAM bank, and a pixel input of a third VRAM bank is mapped to a serial pixel output of said third VRAM bank, and a pixel input of said fourth VRAM is mapped to a serial pixel output of said fourth VRAM bank.

3. The circuit defined by claim 1, wherein said select signals comprise an S0 signal and an S1 signal such that if said select signal S0 is in a first state and said select signal S1 is in a second state then a first pixel input of said first VRAM bank is mapped to a serial pixel output of a third VRAM bank, and a pixel input of a second VRAM bank is mapped to a serial pixel output of a fourth VRAM bank, and a pixel input of said third VRAM bank is mapped to a serial pixel output of said first VRAM bank, and a pixel input of said fourth VRAM bank is mapped to a serial pixel output of said second VRAM bank.

4. The circuit defined by claim 1, wherein said select signals comprise an S0 signal and an S1 signal such that if said select signal S0 is in a second state and said select signal S1 is in a first state then a pixel input of a first VRAM bank is mapped to a serial pixel output of a second VRAM bank, and a pixel input of said second VRAM bank is mapped to a serial pixel output on said first VRAM bank, and a pixel input of a third VRAM bank is mapped to a pixel serial output of a fourth VRAM bank, and a pixel input of said fourth VRAM bank is mapped to a serial pixel output of said third VRAM bank.

5. The circuit defined by claim 1, wherein said select signals comprise an S0 signal and an S1 signal such that if said S0 and S1 are both in a second state then said pixel input of a first VRAM bank is mapped to a serial pixel output of a fourth VRAM bank, and a pixel input of a second VRAM bank is mapped to a serial pixel output of a third VRAM bank, and a pixel input of said third VRAM is mapped to a pixel serial output of said second VRAM bank, and a pixel input of said fourth VRAM bank is mapped to a pixel serial output of said first VRAM bank.

6. The circuit defined by claim 1, wherein said select signals comprise a S0 signal and a S1 signal such that if said S0 and S1 are both in a first state then a first control signal is mapped to a control input of a first VRAM bank, and a second control signal is mapped to a control input of a second VRAM bank, and a third control signal is mapped to a control input of a third VRAM bank, and a fourth control signal is mapped to a control input of a fourth VRAM bank.

7. The circuit defined by claim 1, wherein said select signals comprise a S0 signal and a S1 signal such that if said S0 is in a first state and said S1 is in a second state then a first control signal is mapped to control input of a third VRAM bank, and a second control signal is mapped to a control input of a fourth VRAM bank, and a third control signal is mapped to a control input of a first VRAM bank, and a fourth control signal is mapped to a control input of a second VRAM bank.

8. The circuit defined by claim 1, wherein said select signals comprise an S0 signal and an S1 signal such that if said S0 is in a second state and said S1 is in a first state then a first control signal is mapped to a control input of a second VRAM bank, and a second control signal is mapped to a control input on said first VRAM bank, and a third control signal is mapped to a control input of a fourth VRAM bank, and a fourth control signal is mapped to a control input of said third VRAM bank.

9. The circuit defined by claim 1, wherein said select signals comprise an S0 signal and an S1 signal such that if said S0 and S1 are both in a second state then a first control signal is mapped to a control input of a fourth VRAM bank, and a second control signal is mapped to a control input of a third VRAM bank, and a third control signal is mapped to a control input of said second VRAM bank, and a fourth control signal is mapped to a control input of said first VRAM bank.

10. A method for accessing VRAM in a graphics display system having a frame buffer for storing a plurality of pixels each having an associated X address and Y address, said frame buffer arranged as four VRAM banks, comprising the steps of:
receiving pixel data in an original order for four adjacent pixels, said pixel data comprising a first pixel, a second pixel, a third pixel, and a fourth pixel;
receiving a first select signal being coupled to a next to least significant bit of said Y address, and a second select signal being coupled to a least significant bit of said Y address;
mapping said pixel data received in said original order to a first VRAM bank, a second VRAM bank, a third VRAM bank, and a fourth VRAM bank, according to the state of said first select signal, and said second select signal, such that said first pixel, said second pixel, said third pixel, and said fourth pixel that define a vertical line are each stored in a separate one of said VRAM banks;
receiving a first control signal, a second control signal, a third control signal, and a fourth control signal;
the state of said first control signal, the state of said second control signal, the state of said third control signal, and the state of said fourth control signal being determined according to the state of a least significant bit of said X address and a next to least significant bit of said X address;
mapping said first control signal, said second control signal, said third control signal, and said fourth control signal each to a control input for said first VRAM bank, or a control input for said second VRAM bank, or a control input for said third VRAM bank, or a control input for said fourth VRAM bank, according to the state of said first select signal and said second select signal, each said VRAM bank receiving one of said control signals;
generating a pair of line signals indicating a line number for an output pixel as said output pixel is sequenced from said frame buffer; and
generating a pair of pixel number signals;
reading said pixel data from said first VRAM bank, said second VRAM bank, said third VRAM bank, and said fourth VRAM bank, in an order determined by the state of said line signals and said pixel number signals, such that said frame buffer produces said pixel data in said original order;
whereby said pixel data for said four adjacent pixels is selectively mapped to said four VRAM banks.

11. The method of claim 10, wherein the step of selectively mapping said pixel data comprises the steps of:
if said first and second select signals are both in a first state, then mapping said first pixel to said first VRAM bank, said second pixel to said second VRAM bank, said third pixel to said third VRAM bank, and said fourth pixel to said fourth VRAM bank;
if said first select signal is in said first state and said second select signal is in a second state, then mapping said first pixel to said third VRAM bank, said second pixel to said fourth VRAM bank, said third pixel to said first VRAM bank, and said fourth pixel to said second VRAM bank;
if said first select signal is in said second state and said second select signal is in said first state, then mapping said first pixel to said second VRAM bank, said second pixel to said first VRAM bank, said third pixel to said fourth VRAM bank, and said fourth pixel to said third VRAM bank;
if said first and second select signals are both in said second state, then mapping said first pixel to said fourth VRAM bank, said second pixel to said third VRAM bank, said third pixel to said second VRAM bank, and said fourth pixel to said first VRAM bank.

12. The method of claim 10, wherein the step of selectively mapping said first control signal, said second control signal, said third control signal, and said fourth control signal comprises the steps of:
if said first and second select signals are both in a first state, then mapping said first control signal to said control input for said first VRAM bank, said second control signal to said control input for said second VRAM bank, said third control signal to said control input for said third VRAM bank, and said fourth control signal to said control input for said fourth VRAM bank;
if said first select signal is in said first state and said second select signal is in a second state, then mapping said first control signal to said control input for said third VRAM bank, said second control signal to said control input for said fourth VRAM bank, said third control signal to said control input for said first VRAM bank, and said fourth control signal to said control input for said second VRAM bank;
if said first select signal is in said second state and said second select signal is in said first state, then mapping said first control signal to said control input for said second VRAM bank, said second control signal to said control input for said first VRAM bank, said third control signal to said control input for said fourth VRAM bank, and said fourth control signal to said control input for said third VRAM bank;
if said first and second select signals are both in said second state, then mapping said first control signal to said control input for said fourth VRAM bank, said second control signal to said control input for said third VRAM bank, said third control signal to said control input for said second VRAM bank, and said fourth control signal to said control input for said first VRAM bank.

## Patentansprüche

1. Einrichtung zum Zugreifen auf Pixel zum Anzeigen auf einem Ausgabedisplay, die Pixeldaten und eine X-Adresse und eine Y-Adresse zum Zugreifen auf eine Mehrzahl von 2ⁿ VRAM-Bänken in einer ursprünglichen Reihenfolge empfangen kann, wobei die Einrichtung aufweist:
Mittel zum Bilden einer Mehrzahl von n Auswahlsignalen mit einer Mehrzahl von n am geringsten bewerteten Bits der Y-Adresse in umgekehrter Reihenfolge;
Mittel zum Bilden einer Mehrzahl von 2ⁿ Steuersignalen, die durch eine Mehrzahl von n am geringsten bewerteten Bits der X-Adresse festgelegt sind;
wobei die VRAM-Bänke (VA, VB, VC und VD) jeweils einen Steuereingang, einen Pixeleingang und einen seriellen Pixelausgang aufweisen;
eine erste Wechsler-Schaltung (34), die die Pixeldaten in der ursprünglichen Reihenfolge und die Auswahlsignale empfangen kann, wobei die erste Wechsler-Schaltung (34) die Pixeldaten auf den Pixeleingang der verschiedenen VRAM-Bänke in Abhängigkeit vom Zustand der Auswahlsignale abbildet, und wobei die Abbildung dazu führt, daß benachbarte Pixel, die in der ursprünglichen Reihenfolge eine vertikale Linie definieren, in unterschiedlichen VRAM-Bänken gespeichert werden;
eine zweite Wechsler-Schaltung (32), die die Steuersignale und die Auswahlsignale empfangen kann, wobei die zweite Wechsler-Schaltung (32) die Steuersignale auf die Steuereingänge der VRAM-Bänke in Abhängigkeit vom Zustand der Auswahlsignale abbildet, und wobei die Abbildung dazu führt, daß benachbarte Pixel, die in der ursprünglichen Reihenfolge eine vertikale Linie definieren, in unterschiedlichen VRAM-Bänken gespeichert werden;
einen Pixelzähler (24) zum Erzeugen einer Mehrzahl von n Pixelnummersignalen, die eine Pixelnummer für Pixeldaten anzeigen, die von dem seriellen Pixelausgang der VRAM-Bänke übertragen werden;
einen Zeilenzähler (37) zum Erzeugen einer Mehrzahl von n Zeilensignalen, die eine Zeilennummer für Pixeldaten anzeigen, die von dem seriellen Pixelausgang der VRAM-Bänke übertragen werden; und
eine logische Schaltung (35 und 36) zum Empfangen der Zeilensignale und der Pixelnummersignale und zum Erzeugen einer Mehrzahl von n Multiplexer-Auswahlsignalen derart, daß ein Multiplexer (39) während des Betriebs den seriellen Pixelausgang der VRAM-Bänke empfängt und die seriellen Pixeldaten auf die ursprüngliche Reihenfolge zum Anzeigen auf dem Ausgabedisplay abbildet.

2. Schaltung nach Anspruch 1, wobei die Auswahlsignale ein Signal S0 und ein Signal S1 derart umfassen, daß, wenn die Auswahlsignale S0 und S1 beide in einem ersten Zustand sind, ein Pixeleingang einer ersten VRAM-Bank auf einen seriellen Pixelausgang der ersten VRAM-Bank abgebildet wird und ein Pixeleingang einer zweiten VRAM-Bank auf einen seriellen Pixelausgang der zweiten VRAM-Bank abgebildet wird und ein Pixeleingang einer dritten VRAM-Bank auf einen seriellen Pixelausgang der dritten VRAM-Bank abgebildet wird und ein Pixeleingang einer vierten VRAM-Bank auf einen seriellen Pixelausgang der vierten VRAM-Bank abgebildet wird.

3. Schaltung nach Anspruch 1, wobei die Auswahlsignale ein Signal S0 und ein Signal S1 derart umfassen, daß, wenn das Auswahlsignal S0 in einem ersten Zustand und das Auswahlsignal S1 in einem zweiten Zustand ist, ein erster Pixeleingang der ersten VRAM-Bank auf einen seriellen Pixelausgang einer dritten VRAM-Bank abgebildet wird und ein Pixeleingang einer zweiten VRAM-Bank auf einen seriellen Pixelausgang einer vierten VRAM-Bank abgebildet wird und ein Pixeleingang der dritten VRAM-Bank auf einen seriellen Pixelausgang der ersten VRAM-Bank abgebildet wird und ein Pixeleingang der vierten VRAM-Bank auf einen seriellen Pixelausgang der zweiten VRAM-Bank abgebildet wird.

4. Schaltung nach Anspruch 1, wobei die Auswahlsignale ein Signal S0 und ein Signal S1 derart umfassen, daß, wenn das Auswahlsignal S0 in einem zweiten Zustand und das Auswahlsignal S1 in einem ersten Zustand ist, ein Pixeleingang einer ersten VRAM-Bank auf einen seriellen Pixelausgang einer zweiten VRAM-Bank abgebildet wird und ein Pixeleingang der zweiten VRAM-Bank auf einen seriellen Pixelausgang der ersten VRAM-Bank abgebildet wird und ein Pixeleingang einer dritten VRAM-Bank auf einen seriellen Pixelausgang einer vierten VRAM-Bank abgebildet wird und ein Pixeleingang der vierten VRAM-Bank auf einen seriellen Pixelausgang der dritten VRAM-Bank abgebildet wird.

5. Schaltung nach Anspruch 1, wobei die Auswahlsignale ein Signal S0 und ein Signal S1 derart umfassen, daß, wenn S0 und S1 beide in einem zweiten Zustand sind, der Pixeleingang einer ersten VRAM-Bank auf einen seriellen Pixelausgang einer vierten VRAM-Bank abgebildet wird und ein Pixeleingang einer zweiten VRAM-Bank auf einen seriellen Pixelausgang einer dritten VRAM-Bank abgebildet wird und ein Pixeleingang der dritten VRAM-Bank auf einen seriellen Pixelausgang der zweiten VRAM-Bank abgebildet wird und ein Pixeleingang der vierten VRAM-Bank auf einen seriellen Pixelausgang der ersten VRAM-Bank abgebildet wird.

6. Schaltung nach Anspruch 1, wobei die Auswahlsignale ein Signal S0 und ein Signal S1 derart umfassen, daß, wenn S0 und S1 beide in einem ersten Zustand sind, ein erstes Steuersignal auf einen Steuereingang einer ersten VRAM-Bank abgebildet wird und ein zweites Steuersignal auf einen Steuereingang einer zweiten VRAM-Bank abgebildet wird und ein drittes Steuersignal auf einen Steuereingang einer dritten VRAM-Bank abgebildet wird und ein viertes Steuersignal auf einen Steuereingang einer vierten VRAM-Bank abgebildet wird.

7. Schaltung nach Anspruch 1, wobei die Auswahlsignale ein Signal S0 und ein Signal S1 derart umfassen, daß, wenn S0 in einem ersten Zustand und S1 in einem zweiten Zustand ist, ein erstes Steuersignal auf einen Steuereingang einer dritten VRAM-Bank abgebildet wird und ein zweites Steuersignal auf einen Steuereingang einer vierten VRAM-Bank abgebildet wird und ein drittes Steuersignal auf einen Steuereingang einer ersten VRAM-Bank abgebildet wird und ein viertes Steuersignal auf einen Steuereingang einer zweiten VRAM-Bank abgebildet wird.

8. Schaltung nach Anspruch 1, wobei die Steuersignale ein Signal S0 und ein Signal S1 derart umfassen, daß, wenn S0 in einem zweiten Zustand und S1 in einem ersten Zustand ist, ein erstes Steuersignal auf einen Steuereingang einer zweiten VRAM-Bank abgebildet wird und ein zweites Steuersignal auf einen Steuereingang der ersten VRAM-Bank abgebildet wird und ein drittes Steuersignal auf einen Steuereingang einer vierten VRAM-Bank abgebildet wird und ein viertes Steuersignal auf einen Steuereingang der dritten VRAM-Bank abgebildet wird.

9. Schaltung nach Anspruch 1, wobei die Steuersignale ein Signal S0 und ein Signal S1 derart umfassen, daß, wenn S0 und S1 beide in einem zweiten Zustand sind, ein erstes Steuersignal auf einen Steuereingang einer vierten VRAM-Bank abgebildet wird und ein zweites Steuersignal auf einen Steuereingang einer dritten VRAM-Bank abgebildet wird und ein drittes Steuersignal auf einen Steuereingang der zweiten VRAM-Bank abgebildet wird und ein viertes Steuersignal auf einen Steuereingang der ersten VRAM-Bank abgebildet wird.

10. Verfahren zum Zugreifen auf einem VRAM in einem Grafikanzeigesystem mit einem Einzelbildpuffer zum Speichern einer Vielzahl von Pixeln, wobei jedes Pixel eine zugehörige X-Adresse und eine Y-Adresse hat, und wobei der Einzelbildpuffer in Form von vier VRAM-Bänken angeordnet ist, aufweisend die folgenden Schritte:
Empfangen von Pixeldaten in einer ursprünglichen Reihenfolge für vier benachbarte Pixel, wobei die Pixeldaten ein erstes Pixel, ein zweites Pixel, ein drittes Pixel und ein viertes Pixel enthalten;
Empfangen eines ersten Auswahlsignals, das an ein am zweitgeringsten bewertetes Bit der Y-Adresse gekoppelt ist, und Empfangen eines zweiten Auswahlsignals, das an ein am geringsten bewertetes Bit der Y-Adresse gekoppelt ist;
Abbilden der in der ursprünglichen Reihenfolge empfangenen Pixeldaten in eine erste VRAM-Bank, eine zweite VRAM-Bank, eine dritte VRAM-Bank und eine vierte VRAM-Bank in Abhängigkeit vom Zustand des ersten Auswahlsignals und des zweiten Auswahlsignals derart, daß das erste Pixel, das zweite Pixel, das dritte Pixel und das vierte Pixel, die eine vertikale Linie definieren, jeweils in einer gesonderten VRAM-Bank gespeichert werden;
Empfangen eines ersten Steuersignals, eines zweiten Steuersignals, eines dritten Steuersignals und eines vierten Steuersignals;
wobei der Zustand des ersten Steuersignals, der Zustand des zweiten Steuersignals, der Zustand des dritten Steuersignals und der Zustand des vierten Steuersignals bestimmt werden durch den Zustand eines am geringsten bewerteten Bits der X-Adresse und eines am zweitgeringsten bewerteten Bits der X-Adresse;
Abbilden des ersten Steuersignals, des zweiten Steuersignals, des dritten Steuersignals und des vierten Steuersignals jeweils zu einem Steuereingang für die erste VRAM-Bank oder einem Steuereingang für die zweite VRAM-Bank oder einem Steuereingang für die dritte VRAM-Bank oder einem Steuereingang für die vierte VRAM-Bank in Abhängigkeit vom Zustand des ersten Auswahlsignals und des zweiten Auswahlsignals, wobei jede VRAM-Bank eines der Steuersignale empfängt;
Erzeugen eines Paars von Zeilensignalen, die eine Zeilennummer für ein Ausgangspixel anzeigen, wenn das Ausgangspixel in einer Sequenz aus dem Einzelbildpuffer ausgegeben wird; und
Erzeugen eines Paars von Pixelnummersignalen; Lesen der Pixeldaten aus der ersten VRAM-Bank, der zweiten VRAM-Bank, der dritten VRAM-Bank und der vierten VRAM-Bank in einer durch den Zustand der Zeilensignale und der Pixelnummersignale bestimmten Reihenfolge, so daß der Einzelbildpuffer die Pixeldaten in der ursprünglichen Reihenfolge erzeugt;
wodurch die Pixeldaten für die vier benachbarten Pixel selektiv auf die vier VRAM-Bänke abgebildet werden.

11. Verfahren nach Anspruch 10, wobei der Schritt des selektiven Abbildens der Pixeldaten die Schritte umfaßt:
Abbilden des ersten Pixels zur ersten VRAM-Bank, des zweiten Pixels zur zweiten VRAM-Bank, des dritten Pixels zur dritten VRAM-Bank und des vierten Pixels zur vierten VRAM-Bank, wenn das erste und zweite Auswahlsignal beide in einem ersten Zustand sind;
Abbilden des ersten Pixels zur dritten VRAM-Bank, des zweiten Pixels zur vierten VRAM-Bank, des dritten Pixels zur ersten VRAM-Bank und des vierten Pixels zur zweiten VRAM-Bank, wenn das erste Auswahlsignal in dem ersten Zustand und das zweite Auswahlsignal in einem zweiten Zustand ist;
Abbilden des ersten Pixels zur zweiten VRAM-Bank, des zweiten Pixels zur ersten VRAM-Bank, des dritten Pixels zur vierten VRAM-Bank und des vierten Pixels zur dritten VRAM-Bank, wenn das erste Auswahlsignal im zweiten Zustand und das zweite Auswahlsignal im ersten Zustand ist;
Abbilden des ersten Pixels zur vierten VRAM-Bank, des zweiten Pixels zur dritten VRAM-Bank, des dritten Pixels zur zweiten VRAM-Bank und des vierten Pixels zur ersten VRAM-Bank, wenn das erste und zweite Auswahlsignal beide im zweiten Zustand sind.

12. Verfahren nach Anspruch 10, wobei der Schritt des selektiven Abbildens des ersten Steuersignals, des zweiten Steuersignals, des dritten Steuersignals und des vierten Steuersignals folgende Schritte umfaßt:
Abbilden des ersten Steuersignals auf den Steuereingang für die erste VRAM-Bank, des zweiten Steuersignals auf den Steuereingang für die zweite VRAM-Bank, des dritten Steuersignals auf den Steuereingang für die dritte VRAM-Bank und des vierten Steuersignals auf den Steuereingang für die vierte VRAM-Bank, wenn das erste und zweite Auswahlsignal beide in einem ersten Zustand sind;
Abbilden des ersten Steuersignals auf den Steuereingang für die dritte VRAM-Bank, des zweiten Steuersignals auf den Steuereingang für die vierte VRAM-Bank, des dritten Steuersignals auf den Steuereingang für die erste VRAM-Bank und des vierten Steuersignals auf den Steuereingang für die zweite VRAM-Bank, wenn das erste Auswahlsignal im ersten Zustand und das zweite Auswahlsignal in einem zweiten Zustand ist;
Abbilden des ersten Steuersignals auf den Steuereingang für die zweite VRAM-Bank, des zweiten Steuersignals auf den Steuereingang für die erste VRAM-Bank, des dritten Steuersignals auf den Steuereingang für die vierte VRAM-Bank und des vierten Steuersignal auf den Steuereingang für die dritte VRAM-Bank, wenn das erste Auswahlsignal im zweiten Zustand und das zweite Auswahlsignal im ersten Zustand ist;
Abbilden des ersten Steuersignals auf den Steuereingang für die vierte VRAM-Bank, des zweiten Steuersignals auf den Steuereingang für die dritte VRAM-Bank, des dritten Steuersignals auf den Steuereingang für die zweite VRAM-Bank und des vierten Steuersignals auf den Steuereingang für die erste VRAM-Bank, wenn das erste und das zweite Auswahlsignal beide in dem zweiten Zustand sind.

## Revendications

1. Dispositif pour accéder à des pixels destinés à un affichage sur un dispositif d'affichage de sortie, prévu pour recevoir des données de pixels et une adresse X et une adresse Y pour accéder à une pluralité de 2ⁿ plans de mémoires VRAM dans un ordre initial,
ledit dispositif comprenant:
des moyens pour fournir une pluralité de n signaux de sélection comprenant une pluralité de n bits de poids faible de ladite adresse Y dans une ordre inverse;
des moyens pour fournir une pluralité de 2ⁿ signaux de commande déterminés par une pluralité de n bits de poids faible de ladite adresse X;
lesdits plans de mémoires VRAM (VA, VB; VC, et VD) qui comprennent chacun une entrée de commande, une entrée de pixels, et une sortie série de pixels;
un premier circuit de commutation (34) qui est prévu pour recevoir lesdites données de pixels dans ledit ordre initial et pour recevoir lesdits signaux de sélection, ledit premier circuit de commutation (34) pour configurer lesdites données de pixels pour ladite entrée de pixels desdits différents plans de mémoires VRAM dépendant de l'état desdits signaux de sélection, ladite configuration ayant pour résultat des pixels adjacents définissant une ligne verticale dans ledit ordre initial qui est mémorisée dans différents plans desdits plans de mémoires VRAM;
un second circuit de commutation (32) prévu pour recevoir lesdits signaux de commande et lesdits signaux de sélection, ledit second circuit de commutation (32) pour configurer lesdits signaux de commande pour ladite entrée de commande desdits plans de mémoires VRAM dépendant de l'état desdits signaux de sélection, ladite configuration ayant pour résultat des pixels adjacents définissant une ligne verticale dans ledit ordre initial qui est mémorisée dans différents plans desdits plans de mémoires VRAM;
un compteur de pixels (24) pour générer une pluralité de n signaux de numéro de pixel indiquant un numéro de pixel pour des données de pixels qui sont transférées par ladite sortie série de pixels desdits plans de mémoires VRAM;
un compteur de lignes (37) pour générer une pluralité de n signaux de ligne indiquant un numéro de ligne pour des données de pixels qui sont transférées par ladite sortie série de pixels desdits plans de mémoires VRAM; et
un circuit logique (35 et 36) pour recevoir lesdits signaux de ligne et lesdits signaux de numéro de pixel et pour générer une pluralité de n signaux de sélection de multiplexeur de telle manière qu'un multiplexeur (39) reçoit en fonctionnement ladite sortie série de pixels desdits plans de mémoires VRAM et configure lesdites données de pixels série dans ledit ordre initial pour un affichage sur ledit dispositif d'affichage de sortie.

2. Circuit selon la revendication 1, dans lequel lesdits signaux de sélection comprennent un signal S0 et un signal S1 de telle manière que si lesdits signaux de sélection S0 et S1 sont tous les deux dans un premier état, alors, une entrée de pixels d'un premier plan de mémoire VRAM est configurée pour une sortie série de pixels dudit premier plan de mémoire VRAM, et une entrée de pixels d'un second plan de mémoire VRAM est configurée pour une sortie série de pixels dudit second plan de mémoire VRAM, et une entrée de pixels d'un troisième plan de mémoire VRAM est configurée pour une sortie série de pixels dudit troisième plan de mémoire VRAM, et une entrée de pixels dudit quatrième plan de mémoire VRAM est configurée pour une sortie série de pixels dudit quatrième plan de mémoire VRAM.

3. Circuit selon la revendication 1, dans lequel lesdits signaux de sélection comprennent un signal S0 et un signal S1 de telle manière que si ledit signal de sélection S0 est dans un premier état et que ledit signal de sélection S1 est dans un second état, alors, une première entrée de pixels dudit premier plan de mémoire VRAM est configurée pour une sortie série de pixels d'un troisième plan de mémoire VRAM, et une entrée de pixels d'un second plan de mémoire VRAM est configurée pour une sortie série de pixels d'un quatrième plan de mémoire VRAM, et une entrée de pixels dudit troisième plan de mémoire VRAM est configurée pour une sortie série de pixels dudit premier plan de mémoire VRAM, et une entrée de pixels dudit quatrième plan de mémoire VRAM est configurée pour une sortie série de pixels dudit second plan de mémoire VRAM.

4. Circuit selon la revendication 1, dans lequel lesdits signaux de sélection comprennent un signal S0 et un signal S1 de telle manière que si ledit signal de sélection S0 est dans un second état et que ledit signal de sélection S1 est dans un premier état, alors, une entrée de pixels d'un premier plan de mémoire VRAM est configurée pour une sortie série de pixels d'un second plan de mémoire VRAM, et une entrée de pixels dudit second plan de mémoire VRAM est configurée pour une sortie série de pixels dudit premier plan de mémoire VRAM, et une entrée de pixels d'un troisième plan de mémoire VRAM est configurée pour une sortie série de pixels d'un quatrième plan de mémoire VRAM, et une entrée de pixels dudit quatrième plan de mémoire VRAM est configurée pour une sortie série de pixels dudit troisième plan de mémoire VRAM.

5. Circuit selon la revendication 1, dans lequel lesdits signaux de sélection comprennent un signal S0 et un signal S1 de telle manière que si lesdits signaux S0 et S1 sont tous les deux dans un second état, alors, ladite entrée de pixels d'un premier plan de mémoire VRAM est configurée pour une sortie série de pixels d'un quatrième plan de mémoire VRAM, et une entrée de pixels d'un second plan de mémoire VRAM est configurée pour une sortie série de pixels d'un troisième plan de mémoire VRAM, et une entrée de pixels dudit troisième plan de mémoire VRAM est configurée pour une sortie série de pixels dudit second plan de mémoire VRAM, et une entrée de pixels dudit quatrième plan de mémoire VRAM est configurée pour une sortie série de pixels dudit premier plan de mémoire VRAM.

6. Circuit selon la revendication 1, dans lequel lesdits signaux de sélection comprennent un signal S0 et un signal S1 de telle manière que si lesdits signaux S0 et S1 sont tous les deux dans un premier état, alors, un premier signal de commande est configuré pour une entrée de commande d'un premier plan de mémoire VRAM, et un second signal de commande est configuré pour une entrée de commande d'un second plan de mémoire VRAM, et un troisième signal de commande est configuré pour une entrée de commande d'un troisième plan de mémoire VRAM, et un quatrième signal de commande est configuré pour une entrée de commande d'un quatrième plan de mémoire VRAM.

7. Circuit selon la revendication 1, dans lequel lesdits signaux de sélection comprennent un signal S0 et un signal S1 de telle manière que si ledit signal S0 est dans un premier état et que ledit signal S1 est dans un second état, alors, un premier signal de commande est configuré pour une entrée de commande d'un troisième plan de mémoire VRAM, et un second signal de commande est configuré pour une entrée de commande d'un quatrième plan de mémoire VRAM, et un troisième signal de commande est configuré pour une entrée de commande d'un premier plan de mémoire VRAM, et un quatrième signal de commande est configuré pour une entrée de commande d'un second plan de mémoire VRAM.

8. Circuit selon la revendication 1, dans lequel lesdits signaux de sélection comprennent un signal S0 et un signal S1 de telle manière que si ledit signal S0 est dans un second état et que ledit signal S1 est dans un premier état, alors, un premier signal de commande est configuré pour une entrée de commande d'un second plan de mémoire VRAM, et un second signal de commande est configuré à une entrée de commande dudit premier plan de mémoire VRAM, et un troisième signal de commande est configuré pour une entrée de commande d'un quatrième plan de mémoire VRAM, et un quatrième signal de commande est configuré pour une entrée de commande dudit troisième plan de mémoire VRAM.

9. Circuit selon la revendication 1, dans lequel lesdits signaux de sélection comprennent un signal S0 et un signal S1 de telle manière que si lesdits signaux S0 et S1 sont tous les deux dans un second état, alors, un premier signal de commande est configuré pour une entrée de commande d'un quatrième plan de mémoire VRAM, et un second signal de commande est configuré pour une entrée de commande d'un troisième plan de mémoire VRAM, et un troisième signal de commande est configuré pour une entrée de commande dudit second plan de mémoire VRAM, et un quatrième signal de commande est configuré pour une entrée de commande dudit premier plan de mémoire VRAM.

10. Procédé pour accéder à une mémoire VRAM dans un système d'affichage graphique ayant une mémoire-tampon de trames pour mémoriser une pluralité de pixels ayant chacun une adresse X et une adresse Y associées, ladite mémoire-tampon de trames étant disposée sous la forme de quatre plans de mémoires VRAM, comprenant les étapes consistant à :
recevoir des données de pixels dans un ordre initial pour quatre pixels adjacents, lesdites données de pixels comprenant un premier pixel, un second pixel, un troisième pixel, et un quatrième pixel;
recevoir un premier signal de sélection qui est couplé à un suivant pour un bit de poids faible de ladite adresse Y, et un second signal de sélection qui est couplé à un bit de poids faible de ladite adresse Y;
configurer lesdites données de pixels reçues dans ledit ordre initial pour un premier plan de mémoire VRAM, un second plan de mémoire VRAM, un troisième plan de mémoire VRAM, et un quatrième plan de mémoire VRAM, en fonction de l'état dudit premier signal de sélection, et dudit second signal de sélection, de telle manière que ledit premier pixel, ledit second pixel, ledit troisième pixel, et ledit quatrième pixel qui définissent une ligne verticale sont mémorisés chacun dans un plan distinct desdits plans de mémoires VRAM;
recevoir un premier signal de commande, un second signal de commande, un troisième signal de commande, et un quatrième signal de commande;
l'état dudit premier signal de commande, l'état dudit second signal de commande, l'état dudit troisième signal de commande, et l'état dudit quatrième signal de commande étant déterminés en fonction de l'état d'un bit de poids faible de ladite adresse X et d'un état suivant d'un bit de poids faible de ladite adresse X ;
configurer ledit premier signal de commande, ledit second signal de commande, ledit troisième signal de commande, et ledit quatrième signal de commande destinés chacun à une entrée de commande pour ledit premier plan de mémoire VRAM, ou une entrée de commande pour ledit second plan de mémoire VRAM, ou une entrée de commande pour ledit troisième plan de mémoire VRAM, ou une entrée de commande pour ledit quatrième plan de mémoire VRAM, en fonction de l'état dudit premier signal de sélection et dudit second signal de sélection, chacun desdits plans de mémoires VRAM recevant l'un desdits signaux de commande;
générer une paire de signaux de ligne indiquant un numéro de ligne pour un pixel de sortie tandis que ledit pixel de sortie est délivré dans une séquence par ladite mémoire-tampon de trames; et
générer une paire de signaux de numéro de pixel;
lire lesdites données de pixels dans ledit premier plan de mémoire VRAM, ledit second plan de mémoire VRAM, ledit troisième plan de mémoire VRAM, et ledit quatrième plan de mémoire VRAM, dans un ordre déterminé par l'état desdits signaux de ligne et desdits signaux de numéro de pixel, de telle manière que ladite mémoire-tampon de trames produit lesdites données de pixels dans ledit ordre initial;
de sorte que lesdites données de pixels pour lesdits quatre pixels adjacents sont configurées de manière sélective pour lesdits quatre plans de mémoires VRAM.

11. Procédé selon la revendication 10, dans lequel l'étape consistant à configurer de manière sélective lesdites données de pixels comprend les étapes consistant à :
si lesdits premier et second signaux de sélection sont tous les deux dans un premier état, alors, configurer ledit premier pixel pour ledit premier plan de mémoire VRAM, ledit second pixel pour ledit second plan de mémoire VRAM, ledit troisième pixel pour ledit troisième plan de mémoire VRAM, et ledit quatrième pixel pour ledit quatrième plan de mémoire VRAM;
si ledit premier signal de sélection est dans ledit premier état et que ledit second signal de sélection est dans un second état, alors, configurer ledit premier pixel pour ledit troisième plan de mémoire VRAM, ledit second pixel pour ledit quatrième plan de mémoire VRAM, ledit troisième pixel pour ledit premier plan de mémoire VRAM, et ledit quatrième pixel pour ledit second plan de mémoire VRAM;
si ledit premier signal de sélection est dans ledit second état et que ledit second signal de sélection est dans ledit premier état, alors, configurer ledit premier pixel pour ledit second plan de mémoire VRAM, ledit second pixel pour ledit premier plan de mémoire VRAM, ledit troisième pixel pour ledit quatrième plan de mémoire VRAM, et ledit quatrième pixel pour ledit troisième plan de mémoire VRAM;
si lesdits premier et second signaux de sélection sont tous les deux dans ledit second état, alors, configurer ledit premier pixel pour ledit quatrième plan de mémoire VRAM, ledit second pixel pour ledit troisième plan de mémoire VRAM, ledit troisième pixel pour ledit second plan de mémoire VRAM, et ledit quatrième pixel pour ledit premier plan de mémoire VRAM.

12. Procédé selon la revendication 10, dans lequel l'étape de configuration sélective dudit premier signal de commande, dudit second signal de commande, dudit troisième signal de commande, et dudit quatrième signal de commande comprend les étapes consistant à :
si lesdits premier et second signaux de sélection sont tous les deux dans un premier état, alors, configurer ledit premier signal de commande pour ladite entrée de commande destinée audit premier plan de mémoire VRAM, ledit second signal de commande pour ladite entrée de commande destinée audit second plan de mémoire VRAM, ledit troisième signal de commande pour ladite entrée de commande destinée audit troisième plan de mémoire VRAM, et ledit quatrième signal de commande pour ladite entrée de commande destinée audit quatrième plan de mémoire VRAM;
si ledit premier signal de sélection est dans ledit premier état et que ledit second signal de sélection est dans un second état, alors, configurer ledit premier signal de commande pour ladite entrée de commande destinée audit troisième plan de mémoire VRAM, ledit second signal de commande pour ladite entrée de commande destinée audit quatrième plan de mémoire VRAM, ledit troisième signal de commande pour ladite entrée de commande destinée audit premier plan de mémoire VRAM, et ledit quatrième signal de commande pour ladite entrée de commande destinée audit second plan de mémoire VRAM;
si ledit premier signal de sélection est dans ledit second état et que ledit second signal de sélection est dans ledit premier état, alors, configurer ledit premier signal de commande pour ladite entrée de commande destinée audit second plan de mémoire VRAM, ledit second signal de commande pour ladite entrée de commande destinée audit premier plan de mémoire VRAM, ledit troisième signal de commande pour ladite entrée de commande destinée audit quatrième plan de mémoire VRAM, et ledit quatrième signal de commande pour ladite entrée de commande destinée audit troisième plan de mémoire VRAM ;
si lesdits premier et second signaux de sélection sont tous les deux dans ledit second état, alors, configurer ledit premier signal de commande pour ladite entrée de commande destinée audit quatrième plan de mémoire VRAM, ledit second signal de commande pour ladite entrée de commande destinée audit troisième plan de mémoire VRAM, ledit troisième signal de commande pour ladite entrée de commande destinée audit second plan de mémoire VRAM, et ledit quatrième signal de commande pour ladite entrée de commande destinée audit premier plan de mémoire VRAM.
